# EUROPEAN PATENT APPLICATION

(11) **EP 3 812 756 A1**
(43) Date of publication of application: **28.04.2021**
(21) Application number: 19382921.5
(22) Date of filing: 23.10.2019
(51) Int. Cl.: G01N 27/90

(54) **EDDY CURRENT PROBE FOR INSPECTING CRACKS IN A METALLIC FITTING LUG**

(71) Applicant: Airbus Operations, S.L., 28906 Getafe (ES)
(72) Inventor: DE FRUTOS GALINDO, Yolanda, 28906 Getafe (ES)

(57) **Abstract**

The invention refers to an eddy current probe (1) for inspecting cracks in a metallic fitting lug (2) having a rounded inner diameter (3) and an inner bushing (4) retained in said inner diameter (3), wherein the probe (1) has a C-shape profile (5) provided with a coil (6), the profile (5) being dimensioned to surround/embrace the inner diameter (3) of the lug (2) when installed on a metallic structure (11), and the profile (5) ended by two extremes (7) adapted to receive electrical cables (8) to conduct electricity through the profile (5) to allow the coil (6) to detect electric discontinuities around the lug (2). Preferably, the probe (1) further comprises a flat support (9) movably attached to the profile (5) to allow a variable inspection along the height of the inner diameter (3) of the lug (2).

## Description

### Object of the invention

The present invention refers to an eddy current probe for inspecting cracks in the bore hole of a metallic fitting lug.

One object of the invention is to provide a probe that allows inspecting cracks at different heights (depths) of a metallic fitting lug.

Another object of the invention is to provide a probe easier to use than conventional probes when moving along metallic fitting lugs.

### Background of the invention

In aircrafts, metallic structures are currently inspected during the in-service live of the aircraft by means of eddy current testing (ECT) looking for narrow cracks open to the surface. To carry out this inspection, it is necessary to have access to the surface to be inspected.

During the in-service inspection, the aim is to perform the maintenance inspection of the structure without disassembling parts, or disassembling the minimum parts as possible.

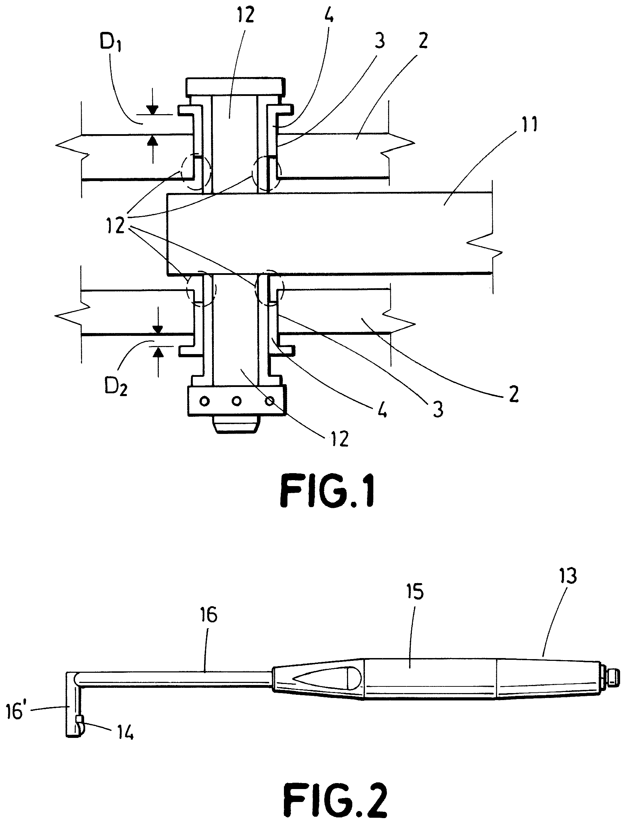

Figure 1 shows a cross-sectional view of two metallic fitting lugs (2) equip with an inner bushing (4), and install on a surface (11) by means of a bolt (12). The figure shows a real in-service case in which the migration of the inner bushing (4) of the fitting lugs (2) can be observed, together with the area to be inspected (12). As shown in Figure 1, bushings (4) can migrate at different heights of the lugs (2) creating different distances (D1, D2) from the surface (11) on which said lugs (2) are installed.

The current ECT inspection method requires having access to the inspection surface in order to be in contact with said surface. For that, a large variety of ECT probes are needed to gain access to the different depths (heights) of the lugs since as shown in Figure 1, bushings can offer different distances (D1, D2) for inspection.

Figure 2 shows a state of the art eddy current testing probe (13) comprising a handle (15) and a stem (16) ended in right-angle tip (16') equip with a coil (14). Conventionally, this right-angle tip (16') is adapted to be introduced between the lug (2) and the structure (11) to inspect the inner diameter of the lug (2) at a specific height value.

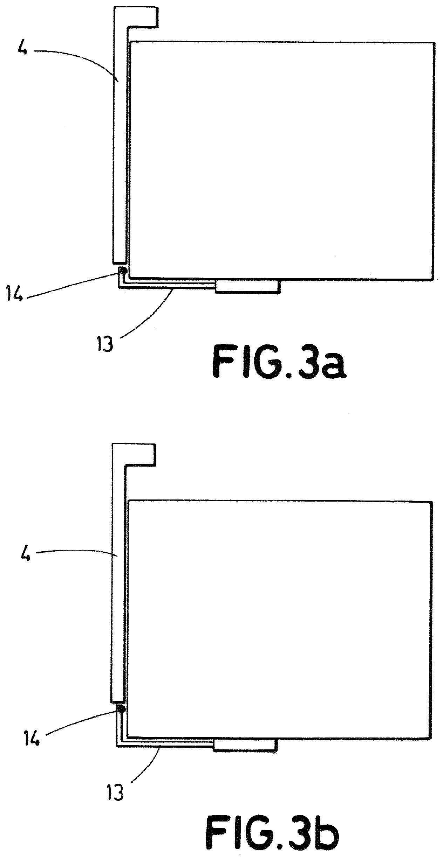

Figures 3a and 3b show two of this state of the art probes (13) with right-angle tips (16') of different lengths in order to be able to inspect lugs at different depths. For inspection, the probes have to be introduced by the gap between the lugs and turned to place the right-angle tip in the area where the bushing has migrated, and then, move the probe all around, starting close to the bushing edge.

The major inconvenience for this inspection method is that the gap between a lug and the structure where it is installed limits the length of the tip. Therefore, several probes with different tip lengths are needed to inspect the entire free bore hole.

Another inconvenience for this state of the art inspection method is that the configuration of the probe must allow its movement all around the lug.

It would therefore be desirable to provide a probe that simplifies the current inspection techniques, avoiding the use of several probes for carrying it out.

### Summary of the invention

The present invention overcomes the above mentioned drawbacks by providing an eddy current probe that solves the above identified limitations of the state of the art.

The present invention refers to an eddy current probe for inspecting cracks in a metallic fitting lug having a rounded inner diameter and an inner bushing retained in said inner diameter. According to the invention, the probe has a C-shape profile provided with a coil, and dimensioned to surround the inner diameter of the lug when installed on a metallic structure. Additionally, the profile is ended by two extremes adapted to receive electrical cables to conduct electricity through the profile, and thus allow the coil to detect electric discontinuities around the lug.

This way, the invention provides a versatile probe that allows the inspection of the inner diameter of a lug at different height values (depth values), by embracing said inner diameter and, either fitting the migration gap or allowing an easy movement upwards and backwards within the migration gap, and all around the inner diameter, without having to dissemble any piece of the installation.

Preferably, the probe of the invention further comprises a flat support movably attached to the profile. This way, the probe easies a variable inspection along the height of the inner diameter of the lug.

### Brief description of the drawings

For a better comprehension of the invention, the following drawings are provided for illustrative and non-limiting purposes, wherein:
Figure 1 shows a cross-sectional view of two metallic fitting lugs equip with inner bushings that are installed on a surface by means of a bolt.
Figure 2 shows a state of the art probe with a right-angle tip provided with a coil for inspection.
Figures 3a and 3b show two state of the art probes with right-angle tips of different lengths in order to be able to inspect lugs at different depths.
Figure 4 shows an eddy current probe for inspecting cracks in metallic fitting lugs, according to one preferred embodiment of the present invention.
Figure 5 shows an eddy current probe for inspecting cracks in metallic fitting lugs, according to another preferred embodiment of the present invention.

### Preferred embodiments of the invention

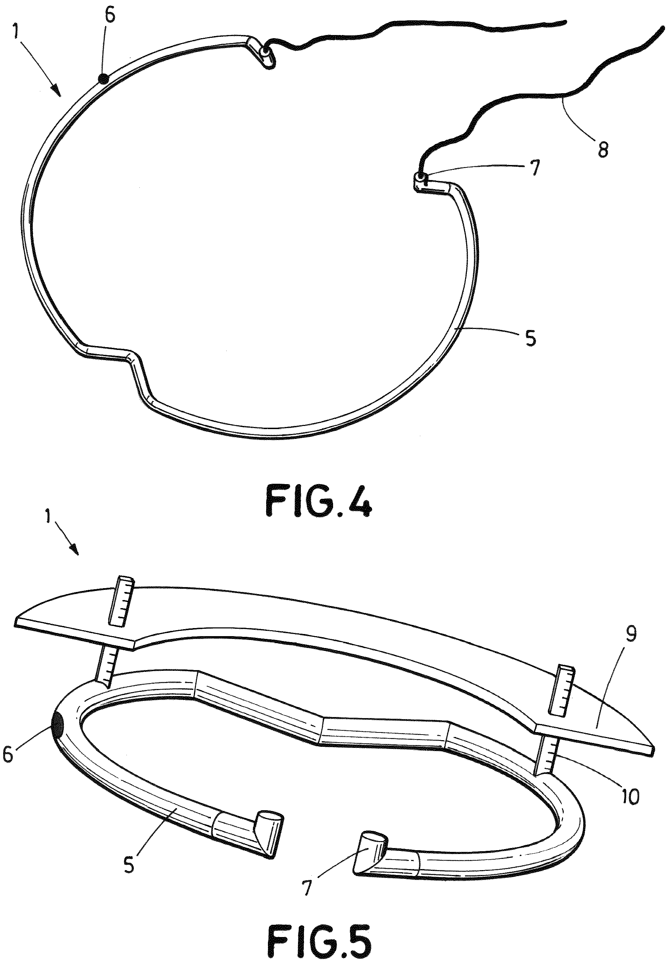

Figure 4 shows a first preferred embodiment of an eddy current probe (1) according to the invention. As shown, the probe (1) has a substantially C-shape profile (5) dimensioned to embrace the inner diameter (3) of the lug (2) that is going to be inspected.

This profile configuration allows an easy adaptation to the lugs, which, as shown in Figure 1 have a rounded inner diameter (3) and an inner bushing (4) retained in said inner diameter (3) capable of migrating to allow the introduction of the probe.

The probe (1) is further provided with a coil (6) to detect the electric discontinuities around the lug (2). To allow that, the profile (5) is adapted to receive electrical cables (8) that feed electricity to the probe (1) in order to permit the detection of electric discontinuities around the lug (2).

Introducing this rounded probe (1) in the gap between the lugs (2) and the surface (11) and moving it upwards and backwards along the area to be inspected (12) easies the detection, allowing that bolts (12) keep installed. Thus, the present invention allows the inspection of the bore of the lug (2) with the bolt (12) installed and, also, allows to know the depth of a crack detected, if any.

Figure 5 shows a second preferred embodiment of an eddy current probe (1) according to the invention. As shown, the probe (1) further comprises a flat support (9) movable attached with respect to the profile (5) to allow a variable inspection along the height (depth) of the inner diameter (3) of the lug (2).

As shown, the flat support (9) is attached to the C-shape profile (5) by at least one leg (10) marked with measurement metrics to identify the height value (depth value) of the inner diameter (3) of the lug (2) that is being inspected.

Preferably, the at least one leg connecting the profile and the support may be of a flexible material that can be adjusted before the inspection to allow variations of the inspection depth.

As show in Figures 4 and 5, the C-shape profile (5) preferably has a rounded cross-section to permit a better fitting of the probe around the lugs in the space left by the bushings after migration.

## Claims

1. Eddy current probe (1) for inspecting cracks in a metallic fitting lug (2), the lug (2) having a rounded inner diameter (3) and an inner bushing (4) retained in said inner diameter (3), wherein the probe (1) has a C-shape profile (5) provided with a coil (6), the profile (5) being dimensioned to surround the inner diameter (3) of the lug (2) when installed on a metallic structure (11), and the profile (5) ended by two extremes (7) adapted to receive electrical cables (8) to conduct electricity through the profile (5) to allow the coil (6) to detect electric discontinuities around the lug (2).

2. Eddy current probe (1) for inspecting cracks in a metallic fitting lug (2), according to claim 1, further comprising a flat support (9) movably attached to the profile (5) to allow a variable inspection along the height of the inner diameter (3) of the lug (2).

3. Eddy current probe (1) for inspecting cracks in a metallic fitting lug (2), according to claim 2, wherein the flat support (9) is attached to the C-shape profile (5) by at least one leg (10) marked with measurement metrics to identify the height value of the inner diameter (3) of the lug (2) that is being inspected.

4. Eddy current probe (1) for inspecting cracks in a metallic fitting lug (2), according to any of claims 2-3, wherein the C-shape profile (5) preferably has a rounded cross-section.
